# FASCICULE DE BREVET EUROPEEN

(11) **EP 1 525 146 B1**
(45) Date de publication et mention de la délivrance du brevet: **19.12.2007**
(21) Numéro de dépôt: 03753660.4
(22) Date de dépôt: 22.07.2003
(51) Int. Cl.: B65H 1/00

(54) **DISPOSITIF POUR CONDITIONNER DES BANDES CONTINUES DE MATERIAU TELLES QUE LES LISIERES GENEREES SUR DES UNITES DE THERMOFORMAGE**
VORRICHTUNG ZUM VORBEREITEN VON MATERIALBAHNEN WIE AUF THERMOFORMANLAGEN ERZEUGTEN FANGLEISTEN
DEVICE FOR PACKAGING CONTINUOUS WEBS OF MATERIALS SUCH AS SELVEDGES GENERATED ON THERMOFORMING UNITS

(30) Priorité: 23.07.2002 FR 0209320
(43) Date de publication de la demande: 27.04.2005
(73) Titulaire: SARL Additif Société à responsabilité limitée, 39100 Foucherans (FR)
(72) Inventeur: POURCHET, Jean-Yves, F-39100 Jouhe (FR); POURCHET, Bernard, F-21130 Billey (FR)
(74) Mandataire: Rhein, Alain
(86) Numéro de dépôt international: PCT/FR2003/002310
(87) Numéro de publication internationale: WO 2004/011353

(56) Documents cités:
- EP-A- 0 624 440
- GB-A- 980 951
- US-A- 5 322 232

## Description

La présente invention a pour objet un dispositif pour conditionner des bandes continues de matériau telles que les lisières générées sur des unités de thermoformage au cours de procédés de fabrication de récipients destinés au conditionnement d'aliments.

Ces unités de thermoformage utilisent des films de matériaux plastiques qui défilent en continu et qu'elles transforment thermiquement pour créer des récipients. Une fois remplis et fermés, les récipients obtenus sont découpés dans ces films, afin d'en dégager les produits conditionnés, il en résulte des chutes qui se présentent sous la forme de bandes qu'il faut éliminer progressivement pour libérer les machines et permettre la poursuite de la fabrication.

On connaît déjà plusieurs méthodes pour réaliser en continu l'élimination et le conditionnement de ces bandes, notamment celle décrite dans le document US 2 251 312, qui consiste à couper les bandes en morceaux calibrés pouvant être récupérés dans des conteneurs.

On connaît également par le document EP 0 624 440 au nom de la Demanderesse, une machine fonctionnant selon une méthode analogue, et qui avantageusement comprend des moyens d'avance aptes à faire avancer les bandes au pas d'avance des unités de thermoformage de sorte à obtenir des morceaux de faible longueur, et comprenant des moyens de régulation d'entrée des bandes. Les moyens d'avance de la bande amènent, dans un mouvement saccadé, ladite bande jusqu'à un moyen de coupe de type guillotine, lesdits moyens d'avance ainsi que le moyen de coupe étant mus par un vérin unique.

Si cette machine permet d'obtenir des morceaux de bandes plus petits, en sorte de réduire le volume qu'ils occupent dans les conteneurs, elle présente toutefois des inconvénients notamment en ce qu'elle est destinée à être fixée à une machine de thermoformage ce qui, du fait de son relatif encombrement, peut parfois se révéler impossible.

Cette machine présente en outre l'inconvénient d'être parfois sujette à des phénomènes de bourrage lors de l'opération de coupe des bandes, ce qui nécessite des interventions répétées de la part des opérateurs. Ces phénomènes sont fréquents lorsque le film de matériau utilisé consiste en du plastique souple, ce qui est lié aux modes d'avance et de coupe utilisés.

La présente invention a pour but de proposer un dispositif pour conditionner des bandes continues adaptable à toute unité de thermoformage permettant de remédier aux divers inconvénients précités, en étant aptes à réaliser efficacement des morceaux de bandes occupant un faible volume et pouvant être conditionnés de manière optimale.

Le dispositif pour conditionner des bandes continues de matériau telles que les lisières générées sur des unités de thermoformage selon l'invention, est du type comportant des moyens de régulation d'entrée des bandes, des moyens de guidage et d'entraînement desdites bandes, ainsi qu'un moyen de coupe et, en aval de ces derniers, des moyens de collecte des morceaux de bandes, et il se caractérise essentiellement en ce que lesdits moyens de coupe consistent en au moins un couteau animé d'un mouvement de va et vient coopérant avec une contre-lame, et en ce que lesdits moyens de guidage et d'entraînement sont associés à un moyen d'amenage par flux d'air desdites bandes, disposé immédiatement avant ledit couteau et ladite contre-lame.

Selon une caractéristique additionnelle du dispositif selon l'invention, les moyens de guidage et d'entraînement comportent deux galets qui roulent l'un contre l'autre en contra-rotation, mus pas à pas, en sorte d'être aptes à pincer la bande et à l'entraîner à une cadence déterminée vers les moyens d'amenage.

Selon une autre caractéristique additionnelle du dispositif selon l'invention, les galets sont entraînés par un vérin pneumatique en association avec une roue libre et un train d'engrenages.

Selon une autre caractéristique additionnelle du dispositif selon l'invention, les moyens d'amenage par flux d'air consistent en une pièce de forme générale tubulaire comprenant une extrémité d'entrée par laquelle est introduite la bande en provenance des moyens de guidage et d'entraînement, et une extrémité de sortie par laquelle sort ladite bande et dont au moins une partie du bord constitue la contre-lame, tandis que des moyens internes sont aptes à permettre, en association avec une source d'air sous pression, à créer un flux d'air dans le sens entrée/sortie.

De manière avantageuse, la pièce de forme générale tubulaire est conique et va en rétrécissant de l'entrée vers la sortie.

Selon une autre caractéristique additionnelle du dispositif selon l'invention, le couteau est mû par l'intermédiaire d'un vérin pneumatique qui constitue également la source d'air sous pression qui génère le flux d'air.

De manière préférentielle, le dispositif selon l'invention comprend un automate apte à synchroniser l'action du vérin d'entraînement à celle du vérin de coupe.

Du point de vue conception, le couteau se déplace dans un plan horizontal tandis que l'amenage de la bande est réalisé verticalement. De plus, un dispositif selon l'invention comprend de préférence deux moyens d'amenage parallèles, un pour chacune des deux lisières, associés un seul moyen de coupe.

De manière avantageuse, le dispositif selon l'invention est associé à des moyens de renvoi comprenant un ensemble de poulies permettant d'acheminer les bandes en provenance de la thermo-formeuse quel que soit l'emplacement dudit dispositif par rapport à cette dernière.

Selon une forme de réalisation préférentielle du dispositif selon l'invention; les moyens de collecte des morceaux de bande comprennent un sac monté de manière amovible sur un tiroir, lequel est associé à un mécanisme apte à provoquer, lors de l'ouverture dudit tiroir, le déploiement d'un volet sous les moyens de coupe en vue de collecter lesdits morceaux le temps du remplacement dudit sac.

De manière avantageuse du point de vue sécurité, le volet permet également d'empêcher l'accès au couteau.

Les avantages et les caractéristiques du dispositif selon l'invention, ressortiront plus clairement de la description qui suit et qui se rapporte au dessin annexé, lequel en représente un mode de réalisation non limitatif.

Dans le dessin annexé :
- la figure 1 représente une vue schématique en perspective du dispositif selon l'invention,
- la figure 2 représente une vue schématique en perspective d'une partie du même dispositif.
- la figure 3 représente une vue schématique en perspective d'une autre partie du même dispositif.
- la figure 4 représente une vue schématique en perspective de dessous de la même partie.
- la figure 5 représente une vue schématique en perspective et en éclaté d'une autre partie du même dispositif

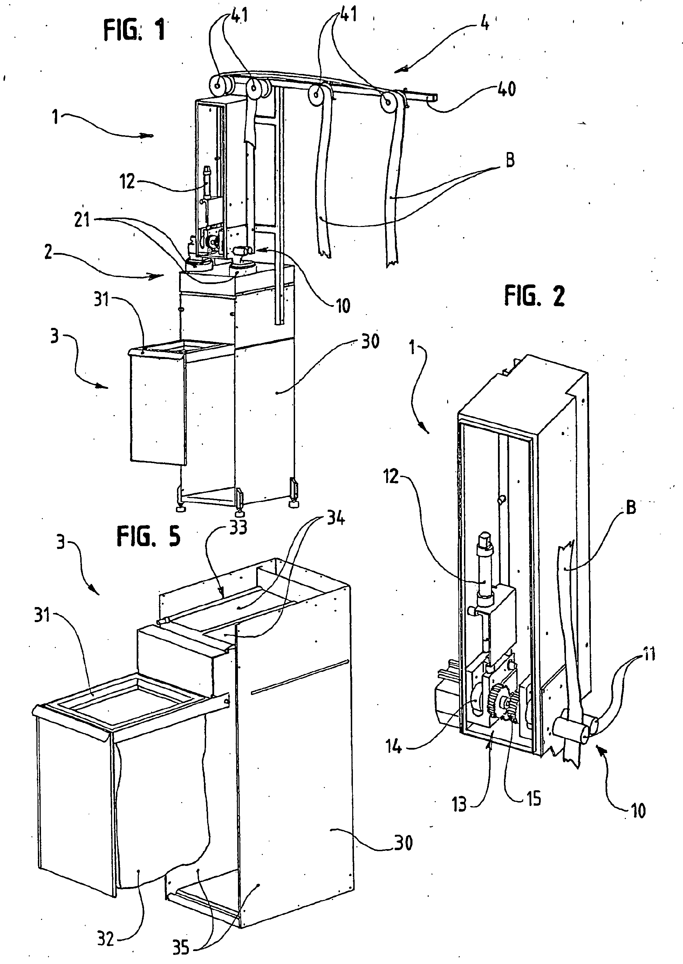

En référence à la figure 1, on peut voir que le dispositif selon l'invention se présente sous la forme d'une machine destinée à être positionnée à proximité d'une thermo-formeuse, non représentée.

Ce dispositif comprend des moyens 1, représentés partiellement, de guidage et d'entraînement pour chacune des bandes B issues de la thermo-formeuse, de moyens 2 de coupe, non visibles, et des moyens 3 de collecte des morceaux de bandes.

Les bandes B sont acheminées depuis la thermo-formeuse par l'intermédiaire de moyens de renvoi 4 comprenant une rampe 40 munie de poulies 41. La rampe 40 est portée par une structure 42 qui est solidarisée au dispositif de manière réversible en sorte que la rampe 40 puisse s'étendre dans différentes directions, tandis que les poulies 41 peuvent être déplacées sur la rampe 40, autorisant ainsi une adaptation à des installations présentant des configurations différentes, et indépendamment de la thermo-formeuse.

Les moyens 1 de guidage et d'entraînement sont associés chacun à un moyen de régulation, non représenté, de type connu, tel que par exemple celui décrit dans le document EP 0.624.440, permettant de réguler l'alimentation d'une paire 10 de galets 11 également visibles sur la figure 2, laquelle représente les moyens 1 de guidage et d'entraînement.

On notera que les moyens 1 de guidage et d'entraînement comportent deux paires 10 de galets 11, une pour chaque bande B, mais qu'une seule est visible sur les figures.

Les galets 10 sont entraînés pas à pas en contre rotation et en sorte de pincer une bande B, au moyen d'un vérin pneumatique 12 entraînant un système 13 qui comprend une roue libre 14 et un train d'engrenages 15.

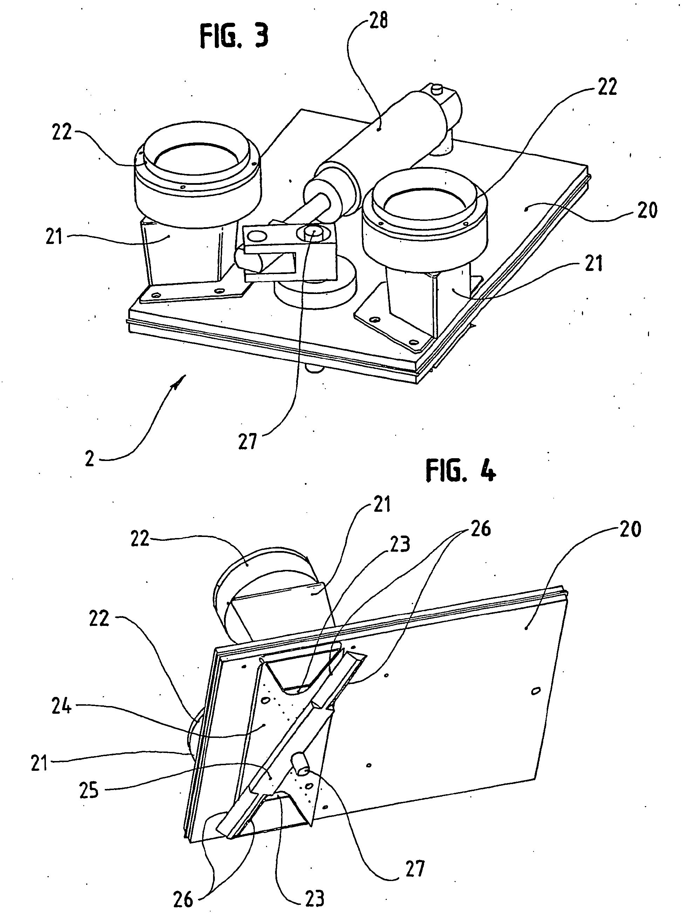

Les bandes B sont ainsi emmenées du haut vers le bas pour déboucher au niveau des moyens 2 de coupe représentés sur les figures 3 et 4.

En référence à ces figures, on peut voir que les moyens 2 de coupe comprennent une platine 20 traversée par deux pièces 21 de forme tubulaire conique, dont l'ouverture supérieure 22 est évasée tandis que l'ouverture inférieure 23 est étroite. L'ouverture inférieure 23 de chacune des pièces tubulaires est bordée par une contre-lame 24 destinée à coopérer avec un couteau 25 comprenant quatre bords de coupe 26 et monté sur un arbre 27 mû en pivotement par l'intermédiaire d'un vérin pneumatique 28 fixé sur le dessus de la platine 20. La course en va et vient du vérin pneumatique 28 génère un déplacement alternatif du couteau 25 qui balaye les deux ouvertures inférieures 23.

Par ailleurs, les deux pièces tubulaires 21 comportent intérieurement des moyens, non représentés, aptes à générer un flux d'air du haut vers le bas, en association avec une source d'air sous pression, issue par exemple du vérin pneumatique 28.

Les deux pièces tubulaires 21 sont disposées chacune au droit d'une paire 10 de galets 11 en sorte que ceux-ci amènent l'extrémité de la bande B qu'ils entraînent, dans la pièce tubulaire 21.

On comprendra que l'extrémité de la bande B est, après passage entre les galets 11, guidée par le flux d'air jusqu'à l'extrémité inférieure 23 de la pièce 21 où elle est coupée entre le couteau 25 et la contre lame 24, que ce soit dans un sens ou dans un autre du pivotement du fait de la présence des quatre bords de coupe 26.

De manière particulièrement avantageuse, le vérin pneumatique 12 est commandé par un automate, non représenté, et synchronisé par rapport au vérin de coupe 28 qui commande le couteau 25.

La fréquence du vérin 27 est de préférence constante, la longueur des morceaux de bande B dépend donc de la vitesse du vérin pneumatique 12 qui est réglable.

L'amenage de l'extrémité de la bande B par flux d'air, c'est-à-dire sans contact, et son guidage, du fait de la conicité de la pièce 21, permettent avantageusement d'éviter les phénomènes de bourrage, notamment lorsque les bandes B sont faites d'un matériau souple.

En référence maintenant à la figure 5, on peut voir que le moyen 3 de collecte, destiné à être disposé immédiatement en dessous des moyens 2 de coupe, comprend un caisson 30 muni d'un tiroir 31 portant un sac 32 amovible.

Le caisson 30 est équipé intérieurement d'un volet 33 mobile en pivotement pour prendre deux positions à savoir horizontale et verticale afin de, respectivement, fermer ou ouvrir l'accès au sac 32. En l'occurrence le volet 33 est réalisé en deux parties 34 s'articulant sur les parois latérales 35 du caisson 30.

Le passage d'une position à l'autre est commandé par le manoeuvrement du tiroir 31, ainsi l'extraction de celui-ci provoque la fermeture du volet 33 et inversement.

La fermeture du volet 33 permet de récupérer les morceaux issus de la coupe des bandes durant le remplacement du sac 32, sans avoir à arrêter le processus de coupe, ni celui du thermoformage, ainsi que d'empêcher l'accès au couteau 25.

Le volet 33 est disposé dans le caisson 30 à une certaine hauteur en sorte de délimiter un volume V qui se remplit le temps de l'extraction du tiroir 31 et du remplacement du sac 32. De manière avantageuse, il est prévu des moyens permettant de déterminer que le volume V est rempli, en sorte d'avertir et éventuellement le processus, dans le cas du prolongement de la durée d'ouverture du tiroir 31. Ces moyens peuvent consister en des capteurs, mais également en des moyens qui, en fonction du débit connu permettent de déterminer la durée de remplissage du volume V qui lui aussi est connu.

## Revendications

1. Dispositif pour conditionner des bandes (B) continues de matériau telles que les lisières générées sur des unités de thermoformage, du type comportant des moyens de régulation d'entrée desdites bandes (B), des moyens (1) de guidage et d'entraînement desdites bandes (B), ainsi qu'un moyen (2) de coupe et, en aval de ces derniers, des moyens (3) de collecte des morceaux de bandes, lesdits moyens (2) de coupe consistant en au moins un couteau (25) animé d'un mouvement de va et vient coopérant avec une contre-lame (24), **caractérisé en ce que** lesdits moyens (1) de guidage et d'entraînement sont associés à un moyen (21) d'amenage par flux d'air desdites bandes (B), disposé immédiatement avant ledit couteau (25) et ladite contre-lame (24).

2. Dispositif selon la revendication 1, **caractérisé en ce** les moyens (1) de guidage et d'entraînement comportent deux galets (10) qui roulent l'un contre l'autre en contra-rotation, mus pas à pas, en sorte d'être aptes à pincer la bande (B) et à l'entraîner à une cadence déterminée vers les moyens (21) d'amenage.

3. Dispositif selon la revendication 2, **caractérisé en ce que** les galets (10) sont entraînés par un vérin pneumatique (12) en association avec une roue libre (14) et un train d'engrenages (15).

4. Dispositif selon l'une quelconque des revendications précédentes, **caractérisé en ce que** les moyens d'amenage par flux d'air consistent en une pièce (21) de forme générale tubulaire comprenant une extrémité d'entrée (22) par laquelle est introduite la bande (B) en provenance des moyens (1) de guidage et d'entraînement, et une extrémité de sortie (23) par laquelle sort ladite bande (B) et dont au moins une partie du bord constitue la contre-lame (24), tandis que des moyens internes sont aptes à permettre, en association avec une source d'air sous pression, à créer un flux d'air dans le sens entrée/sortie.

5. Dispositif selon la revendication 4, **caractérisé en ce que** la pièce (21) de forme générale tubulaire est conique et va en rétrécissant de l'entrée (22) vers la sortie (23).

6. Dispositif selon l'une quelconque des revendications précédentes, **caractérisé en ce que** le couteau (25) est mû par l'intermédiaire d'un vérin pneumatique (28) qui constitue également la source d'air sous pression qui génère le flux d'air.

7. Dispositif selon l'une quelconque des revendications 3 à 6, **caractérisé en ce qu'**il comprend un automate apte à synchroniser l'action du vérin d'entraînement (12) à celle du vérin de coupe (28).

8. Dispositif selon l'une quelconque des revendications précédentes, **caractérisé en ce qu'**il est associé à des moyens de renvoi (4) comprenant un ensemble de poulies (41) permettant d'acheminer les bandes (B) en provenance de la thermo-formeuse quel que soit l'emplacement dudit dispositif par rapport à cette dernière.

9. Dispositif selon l'une quelconque des revendications précédentes, **caractérisé en ce que** les moyens (3) de collecte des morceaux de bande (B) comprennent un sac (32) monté de manière amovible sur un tiroir (31), lequel est associé à un mécanisme apte à provoquer, lors de l'ouverture dudit tiroir (31), le déploiement d'un volet (33) sous les moyens (2) de coupe en vue de collecter lesdits morceaux le temps du remplacement dudit sac et d'empêcher l'accès au couteau (25).

## Claims

1. Device for packaging continuous webs (B) of materials such as selvedges generated on thermoforming units, of the type including means for controlling the entering of said webs (B), means (1) for guiding and driving said webs (B), as well as cutting means (2) and, downstream of the latter, means (3) for collecting web pieces, said cutting means (2) consisting of at least one blade (25) subjected to a reciprocating motion co-operating with a counter-blade (24), **characterised in that** said guiding and driving means (1) are associated with means (21) for supplying said webs (B) through an air flow, arranged immediately before said blade (25) and said counter-blade (24).

2. Device according to claim 1, **characterised in that** the guiding and driving means (1) include two rollers (10) which roll in rotation in an opposite direction to each other, stepwise driven, so as to be capable of gripping the web (B) and of driving it at a determined rate towards the supply means (21).

3. Device according to claim 2, **characterised in that** the rollers (10) are driven by a pneumatic jack (12) in association with a freewheel (14) and a gear train (15).

4. Device according to any of the preceding claims, **characterised in that** the means for supplying through an air flow consist of a part (21) of a general tubular shape comprising an inlet end (22) through which the web (B) proceeding from the guiding and driving means (1) is inserted, and an outlet end (23) through which said web (B) exits and at least part of the edge of which constitutes the counter-blade (24), while inner means are capable of allowing, in association with a pressurized-air source, creating an air flow in the inlet/outlet direction.

5. Device according to claim 4, **characterised in that** the part (21) of a general tubular shape is conical and is tapering from the inlet (22) towards the outlet (23).

6. Device according to any of the preceding claims, **characterised in that** the blade (25) is driven through a pneumatic jack (28) which also constitutes the pressurized-air source which generates the air flow.

7. Device according to any of claims 3 to 6, **characterised in that** it comprises an automaton capable of synchronising the action of the driving jack (12) with that of cutting jack (28).

8. Device according to any of the preceding claims, **characterised in that** it is associated with return means (4) comprising a set of pulleys (41) allowing conveying the webs (B) proceeding from the thermoforming machine, irrespective of the location of said device with respect to the latter.

9. Device according to any of the preceding claims, **characterised in that** the means (3) for collecting the web pieces (6) comprise a bag (32) removably fitted on a drawer (31), which is associated with a mechanism capable of causing, when opening said drawer (31), a shutter (33) to unfold under the cutting means (2) in order to collect said pieces during the replacement of said bag and to prevent access to the blade (25).

## Patentansprüche

1. Vorrichtung zum Vorbereiten von Materialbahnen (B) wie auf Thermoformanlagen erzeugten Fangleisten, der Art umfassend Mittel zur Steuerung der Einführung der besagten Bahnen (B), Mittel (1) zum Führen und Antreiben der besagten Materialbahnen (B) sowie ein Mittel (2) zum Schneiden und, stromabwärts zu diesen Letzteren, Mittel (3) zum Sammeln der Materialbahnstücke, wobei die besagten Mittel (2) zum Schneiden aus wenigstens einem Messer (25) bestehen, das in eine Hin- und Herbewegung angetrieben ist und mit einer Gegenschneide (24) zusammenwirkt, **dadurch gekennzeichnet, dass** die besagten Mittel (1) zum Führen und Antreiben einem Mittel (21) zur Vorschubbewegung der besagten Materialbahnen (B) durch Luftfluss zugeordnet sind, das unmittelbar vor dem besagtem Messer (25) und der besagten Gegenschneide (24) angeordnet ist.

2. Vorrichtung nach Anspruch 1, **dadurch gekennzeichnet, dass** die Mittel (1) zum Führen und Antreiben zwei Laufräder (10) umfassen, die schrittweise angetrieben gegeneinander in Gegendrehung rollen, derart, um geeignet zu sein, die Materialbahn (B) zusammenzukneifen und sie mit einem bestimmten Arbeitstakt in Richtung der Mittel (21) zur Vorschubbewegung anzutreiben.

3. Vorrichtung nach Anspruch 2, **dadurch gekennzeichnet, dass** die Laufräder (10) durch einen pneumatischen Arbeitszylinder (12) in Verbindung mit einem Freilaufrad (14) und einem Räderwerk (15) angetrieben sind.

4. Vorrichtung nach irgendeinem der vorgehenden Ansprüche, **dadurch gekennzeichnet, dass** die Mittel zur Vorschubbewegung durch Luftfluss aus einem im Allgemeinen röhrenförmigen Stück (21) bestehen, umfassend einen Einfiihrungsbereich (22), durch welchen die Materialbahn (B) aus den Mitteln (1) zum Führen und Antreiben eingeführt wird, und einen Ausgangsbereich (23), durch welchen die besagte Materialbahn (B) herauskommt, und dessen wenigstens ein Randteil die Gegenschneide (24) bildet, während die inneren Mittel geeignet sind, um in Verbindung mit einer Druckluftquelle zu erlauben, einen Luftfluss in Richtung des Eingangs/Ausgangs zu schaffen.

5. Vorrichtung nach Anspruch 4, **dadurch gekennzeichnet, dass** das im Allgemeinen röhrenförmige Stück (21) konisch ist und sich vom Eingang (22) in Richtung des Ausgangs (23) verengt.

6. Vorrichtung nach irgendeinem der vorgehenden Ansprüche, **dadurch gekennzeichnet, dass** das Messer (25) über einen pneumatischen Arbeitszylinder (28) in Bewegung gesetzt ist, der ebenfalls die Druckluftquelle darstellt, die den Luftfluss erzeugt.

7. Vorrichtung nach irgendeinem der Ansprüche 3 bis 6, **dadurch gekennzeichnet, dass** sie einen Automaten umfasst, geeignet, um die Wirkung des Antriebszylinders (12) mit jener des Schneidezylinders (28) zu synchronisieren.

8. Vorrichtung nach irgendeinem der vorgehenden Ansprüche, **dadurch gekennzeichnet, dass** sie Umlenkungsmitteln (4) zugeordnet ist, umfassend eine Gesamtheit von Rollen (41), erlaubend, die Materialbahnen (B) aus der Thermoformanlage ungeachtet des Standplatzes der besagten Vorrichtung hinsichtlich dieser letzteren zu befördern.

9. Vorrichtung nach irgendeinem der vorgehenden Ansprüche, **dadurch gekennzeichnet, dass** die Mittel (3) zum Sammeln der Materialbahnstücke (B) einen Beutel (32) umfassen, der auf abnehmbare Art und Weise an einem Schieber (31) montiert ist, der mit einem Mechanismus verbunden ist, geeignet, um bei der Öffnung des besagten Schiebers (31) die Entfaltung einer Klappe (33) unter den Mitteln (2) zum Schneiden zu verursachen, um die besagten Stücke bei dem Austausch des besagten Beutels zu sammeln und den Zugang zum Messer (25) zu verhindern.
